## Europäisches Patentamt
## European Patent Office
## Office européen des brevets

(11) Publication number: **0 278 778**
**A2**

(12) **EUROPEAN PATENT APPLICATION**

(21) Application number: **88301194.2**

(22) Date of filing: **12.02.88**

(51) Int. Cl.⁴: **G 09 G 3/36**
**H 04 N 3/12**

(30) Priority: **13.02.87 JP 30811/87**

(43) Date of publication of application:
**17.08.88 Bulletin 88/33**

(84) Designated Contracting States: **DE GB**

(71) Applicant: **SEIKO INSTRUMENTS INC.**
**31-1, Kameido 6-chome Koto-ku**
**Tokyo 136 (JP)**

(72) Inventor: **Ejiri, Akira**
**Seiko Instruments Inc. 31-1, Kameido 6-chome**
**koto-ku Tokyo (JP)**

(74) Representative: **Caro, William Egerton et al**
**J. MILLER & CO. Lincoln House 296-302 High Holborn**
**London WC1V 7JH (GB)**

(54) **An active matrix display device of the non-linear two-terminal type.**

㊼ An active matrix display device of the non-linear two-terminal type, comprises: a plurality of electrodes arranged in rows and columns (1c,1d); active matrix elements including non-linear two-terminal devices (1a) between the row electrodes and the column electrodes; and circuits (3,2) for applying driving signals to the row electrodes and the column electrodes (1c,1d). The arrangement is such that, in operation, the driving signals added to selected row electrodes (1c) are pulses having a peak value that sufficiently lowers the resistance of the corresponding non-linear two-terminal devices (1a) and the driving signals added to non-selected row electrodes (1c) are signals having the same phase and the same amplitudes as display data input to the column electrodes (1d).

FIG. 1(a)

EP 0 278 778 A2

Bundesdruckerei Berlin

**Description**

## AN ACTIVE MATRIX DISPLAY DEVICE OF THE NON-LINEAR TWO-TERMINAL TYPE

This invention relates to active matrix display devices of the non-linear two-terminal type.

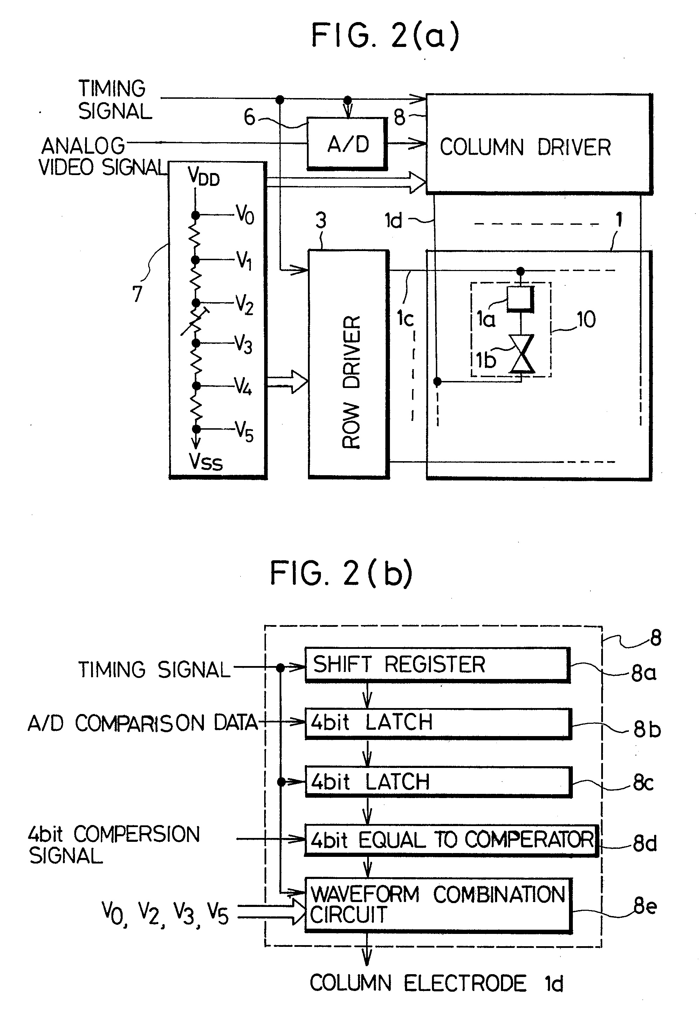

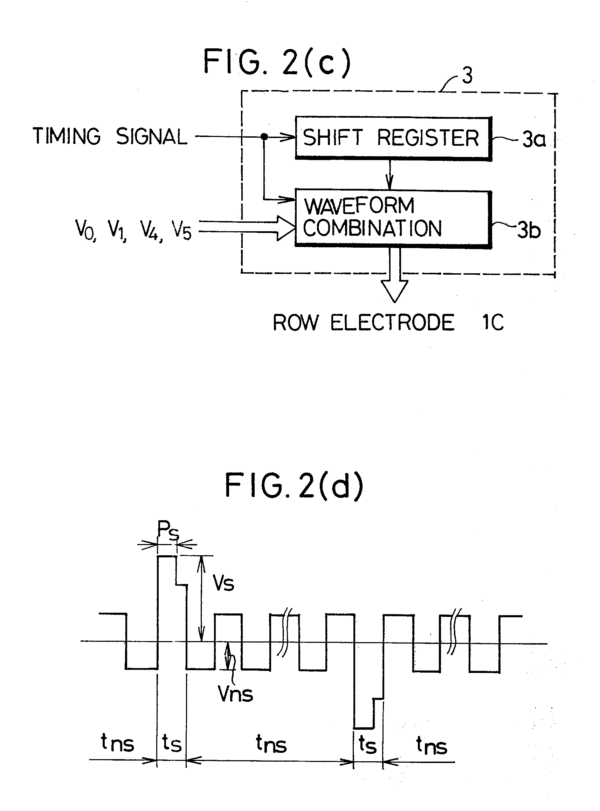

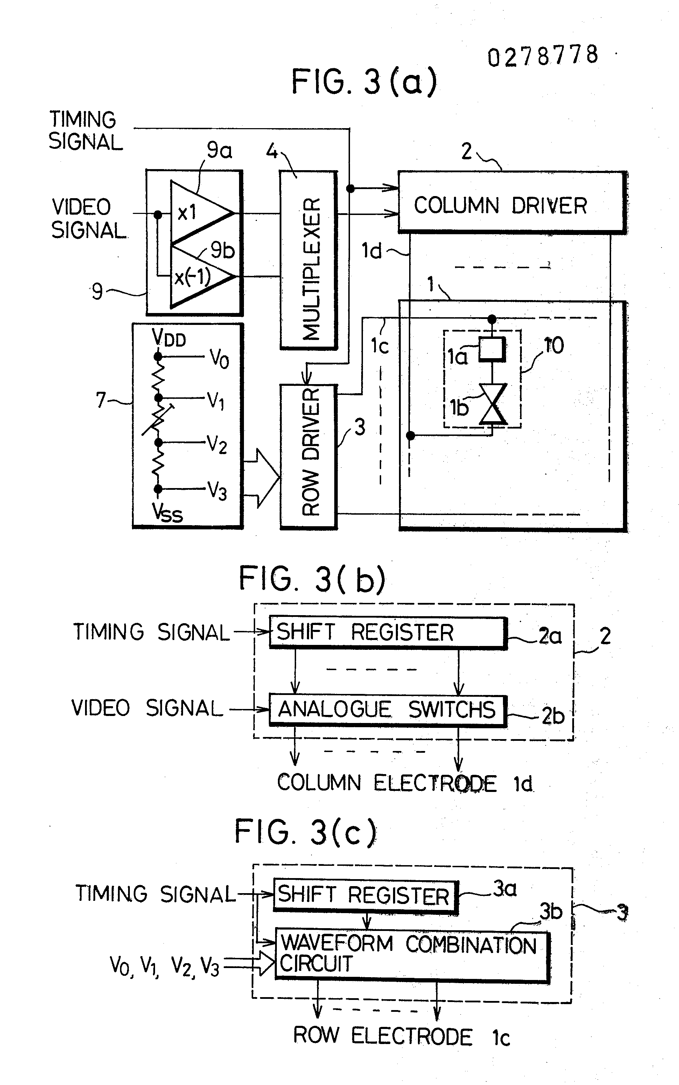

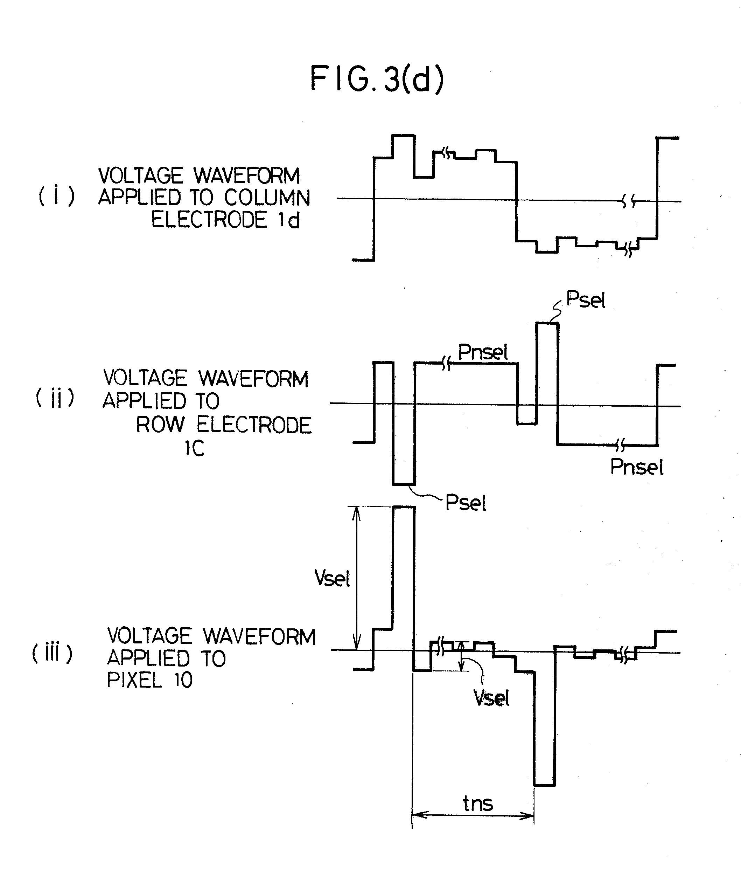

When a large amount of information is displayed by a liquid crystal display device at a high density, the display is driven by a SBE method, a ferroelectric method, an active matrix method or the like. In the active matrix method, transistors or non-linear two-terminal devices form switches on a panel of the display device. The voltage of a display signal is stored on each picture element. This method enables a large amount of information to be displayed with a high image quality. Where non-linear two-terminal devices are used as the switches, it is easier to fabricate a panel on which a large amount of information is to be displayed at a high density than in the case where transistors are used as switches, but it is difficult to obtain high image quality. There are two methods available for driving an active matrix display device using such non-linear two-terminal devices as switches. One method is pulse-duration modulation, and is generally used to display graduation on a simple matrix display device. The other method is amplitude modulation which is used to drive an active matrix display device where transistors are used as switches. These methods of driving an active matrix display device using such non-linear two-terminal devices are described below with reference to Figures 2 and 3.

Figure 2(a) is a block diagram of a circuit for driving a display device by pulse-duration modulation. Figure 2(b) is a block diagram of a column driver 8 of Figure 2(a). Figure 2(c) is a block diagram of a row driver 3 of Figure 2(a) and Figure 2(d) is a waveform diagram of the voltage applied between row and column electrodes. As shown in Figure 2(a), the display device comprises an active matrix panel 1 of the non-linear two-terminal type, a row driver 3, a column driver 8, an analog-to-digital converter 6 and a voltage source 7 for driving the display device

Figure 2(a) is a block diagram of a circuit for driving a display device by pulse-duration modulation. Figure 2(b) is a block diagram of a column driver 8 of the display device of Figure 2(a). Figure 2(c) is a block diagram of a row driver 3 of the display device of Figure 2(a) and Figure 2(d) is a waveform diagram of the voltage applied between row and column electrodes. As shown in Figure 2(a), the display device comprises an active matrix panel 1 of the non-linear two-terminal type, the row driver 3, the column driver 8, an analog-to-digital converter 6 and a voltage source for driving the display device.

The matrix panel 1 has a plurality of row electrodes 1c, a plurality of column electrodes 1d, and a plurality of picture elements 10 (one shown in Figure 2(a)) between the electrodes 1c,1d. The picture elements are arranged in rows and columns and each consists of a non-linear two-terminal device 1a connected in series with a liquid crystal layer 1b. The liquid crystal layer 1b is sandwiched between orientation films (not shown). Normally the matrix panel 1 is energised with 1V and is, for example, composed of 240 to 480 row electrodes 1c and 320 column electrodes 1d. When the display produced is in colour, 320 column electrodes are provided for each of the three primary colours, red, green and blue. In this case the matrix panel has between 76800 and 460800 picture elements.

As shown in Figure 2(b), the column driver 8 for driving the column electrodes 1d comprises a shift register 8a, 4-bit latches 8b,8c, a 4-bit coincidence circuit 8d and a waveform synthesiser circuit 8e.

The circuit illustrated in Figure 2(a) operates as follows. An analog video signal is converted into a digital signal form by the A/D converter circuit 6 and fed to the column driver 8. A timing signal is applied to the shift register 8a of the column driver 8 so that it may be clocked. The digital signal is then stored in the 4-bit latch 8b. After data corresponding to one line of information has been stored in the 4-bit latch 8b, the data is transferred to the 4-bit latch 8c. The the coincidence circuit 8d compares the data held in the 4-bit latch 8c with a 4-bit reference signal. An output signal is furnished to the waveform synthesiser circuit 8e that controls the time for which a selecting or a non-selecting potential is applied to the column electrode 1d. In this case, the graduation is controlled with four bits and, therefore, $2^4 = 16$ selecting periods are possible. The selecting and non-selecting potentials are supplied from the voltage source 7 as constant voltages of $V_0$, $V_1$, $V_4$, $V_5$. In order to drive the display device with alternating current, the waveform synthesiser circuit 8e switches the selecting potential to the non-selecting potential or vice versa on every frame.

As shown in Figure 2(c), the row driver 3 for driving the row electrodes 1c comprises a shift register 3a and a waveform synthesiser circuit 3b. An output signal from the row driver 3 is either a row selecting signal or a row non-selecting signal and is applied to the row electrodes 1c. Their potential are supplied from the voltage source 7 as $V_0$, $V_3$, $V_4$, $V_5$.

Figure 2(d) shows the waveform of the voltage applied between one non-linear two-terminal device 1a and the liquid crystal layer 1b. The waveform is the difference between the output waveform of the column driver 8 and the output waveform of the row driver 3. Within a selecting period $t_s$, a selecting voltage $V_s$ is maintained during a selecting pulse duration $P_s$ that assumes any one of 16 values, depending on the digitised video signal as already described. When the selecting voltage $V_s$ is applied to one picture element, the non-linear two-terminal device 1a contained in it exhibits a low resistance, charging the equivalent capacitance of the liquid crystal layer 1b. At this time, the amount of charging can vary among 16 different values according to changes in the selecting pulse duration $P_s$, whereby the graduation is controlled. During each non-selecting period $t_{ns}$, a voltage $V_{ns}$ is applied to each picture element 10. Under this condition, the non-linear two-terminal device 1a shows a relatively high resistance. Hence the liquid crystal layer 1b which was charged during the previous selecting period is gradually discharged. In this way the graduation is controlled by pulse-duration modulation. This technique is disclosed in Published Japanese Specification No. 14890/83.

The manner in which the graduation may be controlled by amplitude modulation is next described Figure 3(a) is a block diagram of a display device using the a method of amplitude modulation. Figure 3(b) is a block diagram of a column driver of the display device illustrated in Figure 3(a). Figure 3(c) is a block diagram of a row driver 3 of the display device shown in Figure 3(a) and Figure 3(d) is a waveform diagram of the voltage applied to each picture element 10 shown in Figure 3(a).

Referring to Figure 3(a), the column driver 2 comprises a shift register 2a and a set of analog switches 2b which are opened and closed by the output of the shift register 2a. As shown in Figure 3(b) the output signal from the shift register 2a varies according to each timing signal. The outputs of the analog switches 2b are connected with respective column electrodes 1d. A video signal that is applied to the analog switches 2b is fed to the column electrodes 1d successively as information about voltage, via the analog switches which operate according to the timing signal. Thus the video signal is sampled, and the sampled amplitudes are held. Then, they are fed to the column electrodes. It follows that the information about the voltage of the video signal which was sampled and held is retained by the a capacity equal to the sum of the picture elements 10 on the same column electrode. The video signal is supplied to an amplifier 9a having a gain of 1 and also to an amplifier 9b having a gain of -1 to produce signals having different polarities, for driving the display device with alternating current. The amplifiers 9a, 9b are included in a video amplifier circuit 9. A multiplexer 4 alternately supplies the output signals from the amplifiers 9a, 9b to the column driver every frame.

The row driver 3, shown in Figure 3(c) is similar in circuit configuration and operation to the row driver 3 shown in Figure 2(c) and so will not be described further.

Figure 3(d) shows the waveforms of signals applied to the picture element 10 shown in Figure 3(a). A waveform (i) shows the voltage of the video signal which is sampled and held on the column electrode 1d. Waveform (ii) shows the voltage applied to the row electrode 1c. In this waveform, $P_{sel}$ is a row selecting signal. During this period some of the row electrodes are selected. The selected row electrodes inject electric charge to the picture elements 10 or electric charge is released from the picture elements. That is data is written and erased. $P_{nsel}$ shows a row non-selecting signal. During this period, electric charge is not injected to any of the picture elements nor is electric charge released from any of the picture elements. Thus the condition set during the selecting period is maintained.

Waveform (iii) shows the voltage applied to the picture element 10 and this is equal to the voltage difference between the waveform (i) applied to one column electrode and the waveform (ii) applied to one row electrode. When voltage $V_{sel}$ is applied to the picture element 10, the resistance of the non-linear two-terminal device 1a included in the picture element 10 sufficiently decreases. Under this condition, charges are injected to or released from the equivalent capacitance of the liquid crystal layer 1b. During the non-selecting period $t_{ns}$ in which voltage $V_{nsel}$ is applied to the picture element 10, the resistance of the non-linear two-terminal device 1a included in the picture element 10 increases sufficiently, and so the electric charge which was injected during $V_{sel}$ is retained in the equivalent capacitance of the liquid crystal layer 1b. At this time, the graduation of the picture element 10 is controlled according to the value of the selecting voltage $V_{sel}$. The value of $V_{sel}$ depends on the voltage value of the video signal, which is sampled, held and applied to the column electrodes.

The aforedescribed driving methods have inherent problems.

In the pulse-duration method, it is possible to obtain a somewhat higher image quality, but it is know that digital video data of more than 6 bits is generally needed to permit an image to be reproduced in a natural way on a display device. To enable this, the number of drivers used per column electrode increases. As a result, the circuit for driving the column electrodes and the converter circuit for converting the analog video signal to a digital signal becomes expensive.

When the amplitude modulation method is employed, the driving circuit is made simple and only a relatively small number of circuit elements are needed. Therefore the cost is relatively low. However, this method has the following disadvantages. As can be seen from waveform (iii) of Figure 3(d), the video signal which is sampled and held applies a signal having amplitude $V_{nsel}$ to one column electrode during each non-selecting period. This signal varies the resistance value of the non-linear two-terminal device 1a of the picture element 10, causing shift of charge out of or into the equivalent capacitance of the liquid crystal layer 1b. For this reason, the amount of charge which is written to or removed from the equivalent capacitance of the liquid crystal layer 1b by the selecting voltage $V_{sel}$ for displaying purposes is also varied. Then the picture element is affected by the amplitude modulation made for other picture elements on the same column of electrodes. As a result cross-talk occurs along the column electrodes. Hence the desired high contrast and image quality cannot be obtained.

The present invention seeks to provide an active matrix display device of the non-linear two-terminal type which is made of relatively inexpensive circuitry and driven by amplitude modulation and which is free of the problem of cross-talk.

According to the present invention there is provides an active matrix display device of the non-linear two-terminal type, comprising: a plurality of electrodes arranged in rows and columns; active matrix elements including non-linear two-terminal devices between the row electrodes and the column electrodes; and means for applying driving signals to the row electrodes and the column electrodes; characterised in that the arrangement is such that, in operation, said driving signals added to selected row electrodes are pulses having a peak value that sufficiently lowers the resistance of the corresponding non-linear two-terminal devices and said driving signals added to non-selected row electrodes are signals having the same phase and the same amplitude as display data input to the column electrodes.

Preferably each active matrix display device as claimed in claim 1 characterised in that each active matrix element includes a liquid crystal layer connected in series with the respective non-linear two-terminal device.

In one embodiment the means for applying said driving signals to the row electrodes includes a shift register and a synthesiser circuit.

The synthesiser circuit may comprise a plurality of analog switches.

The invention is illustrated, merely by way of example, in the accompanying drawings, in which:-

Figure 1(a) is a block diagram of a non-linear two-terminal display device according to the present invention;

Figure 1(b) is a diagram showing the waveforms produced in the display device of Figure 1(a);

Figure 1(c) is a circuit diagram of a row driver of the display device of Figure 1(a);

Figure 1(d) is a timing chart illustrating the operation of the row driver of Figure 1(c);

Figure 2(a) is a block diagram of a circuit for driving a display device by pulse-duration modulation;

Figure 2(b) is a block diagram of a column driver of the display device cf Figure 2(a);

Figure 2(c) is a block diagram of a row driver of the display device of Figure 2(a);

Figure 2(d) is a waveform diagram of the voltage applied between row and column electrodes of the display device of Figure 2(a);

Figure 3(a) is a block diagram of a display device using the a method of amplitude modulation;

Figure 3(b) is a block diagram of a column driver of the display device illustrated in Figure 3(a);

Figure 3(c) is a block diagram of a row driver of the display device shown in Figure 3(a); and

Figure 3(d) is a waveform diagram of the voltage applied to each picture element 10 shown in Figure 3(a).

Throughout the drawings like parts have been designated by the same reference numerals.

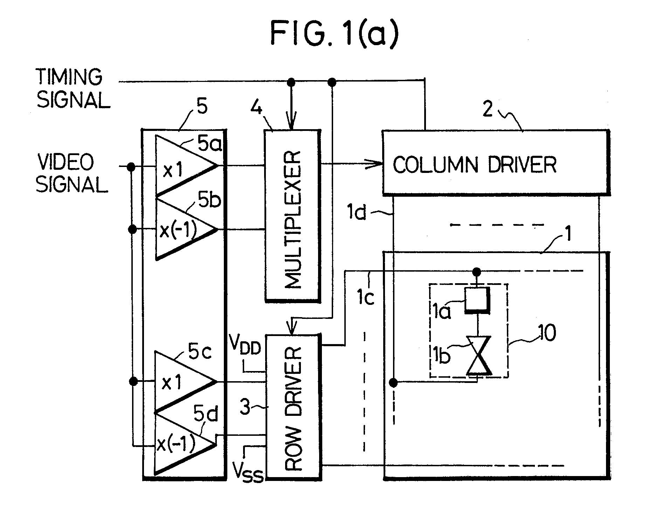

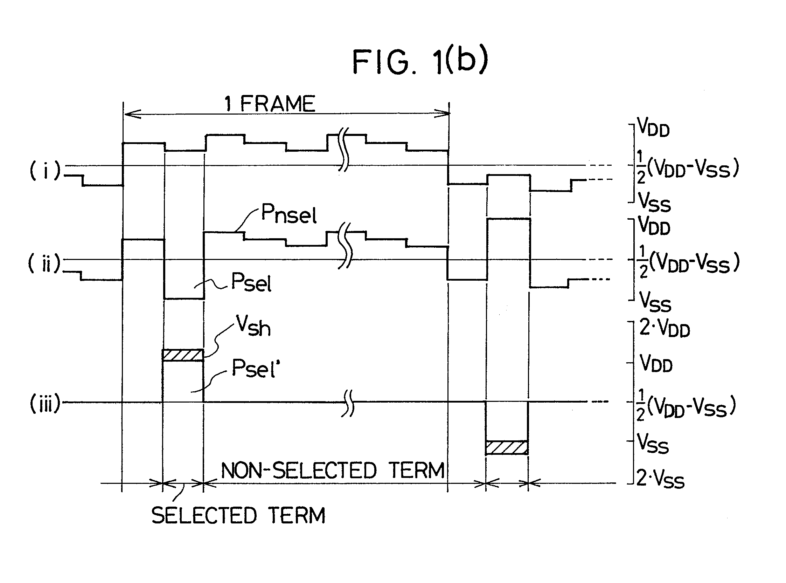

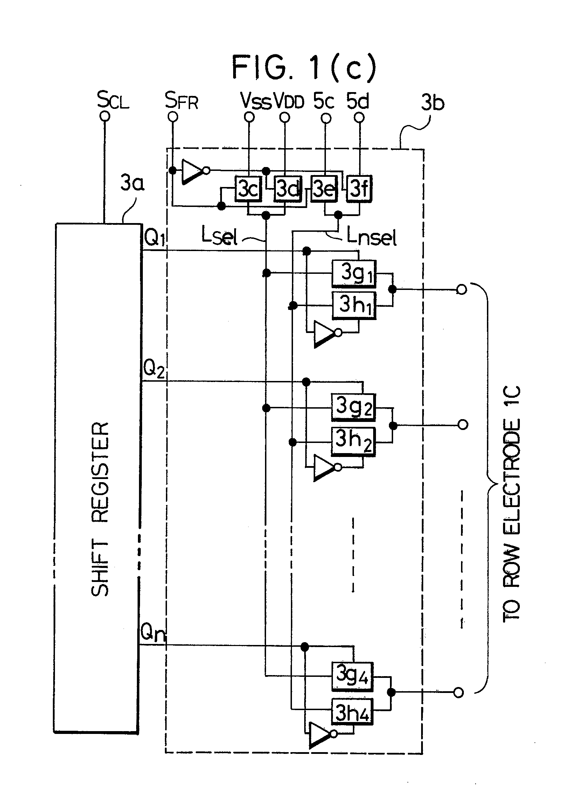

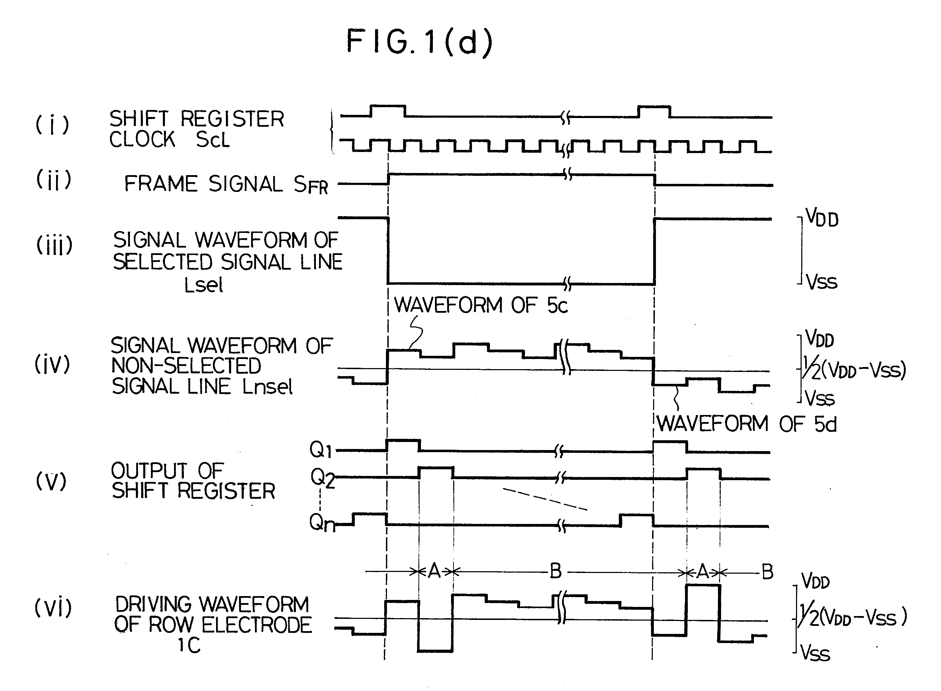

Figure 1(a) is a block diagram of a non-linear two-terminal device active matrix display device according to the present invention.

In the prior art display devices described above, the constant voltage delivered from the voltage source 7 is used as a non-selecting signal applied to the row driver 3. In the present invention, the non-selecting signal is made equal in phase and amplitude to the video signal applied to the column driver 2. Thus the display device of Figure 1(a) is similar to the known display device utilising amplitude modulation except for the surroundings of the row driver 3. The similar portions will therefore not be described again.

Referring now to Figure 1(a), video signals that are 180° out of phase with each other are fed to the row driver 3 after being amplified by amplifiers 5c, 5d included in a video amplifier circuit 5. The circuit of the row driver 3 is shown in Figure 1(c). Figure 1(d) is a timing chart for illustrating the operation of the row driver which consists of a shift register 3a and a waveform synthesiser circuit 3b. Timing signals are applied to the register 3a and the synthesiser circuit 3b. That is, clocks $S_{CL}$ are fed to the register 3a. A frame signal $S_{FR}$ is supplied to the synthesiser circuit 3b including analog switches 3c, 3d, 3e, 3f. The analog switches 3c, 3d are used to synthesise a selecting signal, whilst the switches 3e, 3f are used to synthesise a non-selecting signal. The analog switches 3c, 3d transmit $V_{SS}$ to a selecting signal line $L_{sel}$ when the frame signal is at high level. They transmit $V_{DD}$ to the line when the frame signal $S_{FR}$ is at low level. These conditions are show by waveforms (ii) and (iii) in Figure 1(d). When the frame signal $S_{FR}$ on the non-selecting signal line $L_{nsel}$ is at high level, the analog switches 3e, 3f allow the output from the amplifier 5c to pass. When the frame signal $S_{FR}$ is at low level, they permit the output from the amplifier 5d to pass. The conditions are shown by waveform (iv) in Figure 1(d). The selecting line $L_{sel}$ is connected with analog switches $3g_1$-$3g_n$, whereas the non-selecting signal line $L_{nsel}$ is tied with analog switches $3h_1$-$3h_n$.

Output signals $Q_1$-$Q_n$ from the shift register 3a successively assume high condition selectively to open or close the analog switches $3g_1$-$3g_n$ and $3h_1$-$3h_n$. When the output $Q_i$ ($i = 1$ to n) of the shift register goes high, the signal on the selecting signal line $L_{sel}$ is fed to the corresponding electrode 1c via the analog switch $3g_i$. When $Q_i$ goes low, the signal on the non-selecting signal line $L_{nsel}$ is fed to the row electrode 1c via the analog switch $3h_i$. A waveform (vi) of Figure 1(d) shows the voltage applied to the row electrode 1c in response to the output $Q_2$ from the shift register. During period A when the output $Q_2$ takes a high level, a signal corresponding to the waveform (ii) of Figure 1(d) is delivered. During period B when the output $Q_2$ assumes a low level, a signal corresponding to the waveform (iv) show in Figure 1(d) is delivered. During the period A, a voltage is applied to one picture element 10 of the display device and so this period is a non-selecting period.

The waveforms of voltages applied to the row electrodes 1c, the column electrodes 1d and the picture elements are next described with reference to Figure 1(b). Waveform (i) of Figure 1(b) is a video signal which is sampled and held by the column driver 2 and fed to one of the column electrodes 1d. The polarity of the signal is inverted on every frame to drive the display device with alternating current.

Waveform (ii) of Figure 1(b) is a signal which is supplied to one row electrode 1c by the row driver 3. This signal is equal in potential and phase to the video signal which can be either a selecting signal $P_{sel}$ or a non-selecting signal $P_{nsel}$ delivered to one column electrode 1d. The selecting signal $P_{sel}$ has a constant voltage $V_{SS}$ or $V_{DD}$.

Waveform (iii) of Figure 1(b) shows the voltage applied to the picture element 10 at the intersection of one column electrode 1d and one row electrode 1c. This waveform is the difference between the waveform (i) of the signal applied to the column electrode 1(d) and the waveform (ii) of the signal applied to the row electrode 1c. As can be seen, during each non-selecting period, the signals applied to the column electrode 1d and the row electrode 1c are equal in phase and amplitude. Therefore, the potential difference appearing at the picture element is null. As a result, during the non-selecting period, the non-linear two-terminal device 1a included in the picture element 10 is maintained at high resistance. Consequently, the amount of electric charge which was written to the equivalent capacitance of the liquid crystal layer 1b or erased during the selecting period can be maintained. This permits removal of the effects of the voltage applied to the column electrode on each picture element, i.e. cross-talk.

In this way, during each selecting period, the liquid crystal layer 1b is charged to the potential of the video signal or discharged via the non-linear two-terminal device 1a whose resistance is rendered sufficiently low. During each non-selecting period, the potential across the liquid crystal layer is retained by the non-linear two-terminal device 1a which has a sufficiently high resistance.

As described above an active matrix display device of the non-linear two-terminal type uses a simple and relatively inexpensive driver circuit to display images or characters at high image quality without producing cross-talk. It will be appreciated that the present invention is also applicable to active matrix display devices making use of a two-valued variable as well as to display of gradation.

**Claims**

1. An active matrix display device of the non-linear two-terminal type, comprising: a plurality of electrodes arranged in rows and columns (1c,1d); active matrix elements including non-linear two-terminal devices (1a) between the row electrodes and the column electrodes; and means (3,2) for applying driving signals to the row electrodes and the column electrodes (1c,1d); characterised in that the arrangement is such that, in operation, said driving signals added to selected row electrodes (1c) are pulses having a peak value that sufficiently lowers the resistance of the corresponding non-linear two-terminal devices (1a) and said driving signals added to non-selected row electrodes (1c) are signals having the same phase and the same amplitude as display data input to the column electrodes (1d).

2. An active matrix display device as claimed in claim 1 characterised in that each active matrix element includes a liquid crystal layer (1b) connected in series with the respective non-linear two-terminal device (1a).

3. An active matrix display device as claimed in claim 1 or 2 characterised in that the means (3) for applying said driving signals to the row electrodes (1c) includes a shift register (3a) and a synthesiser circuit (3b).

4. An active matrix display device as claimed in claim 3 characterised in that the synthesiser circuit (3b) comprises a plurality of analog switches ($3g_1-3g_n, 3h_1-3h_n$).

5. An active matrix display device of the nonlinear two-terminal type, comprising: a plurality of electrodes arranged in rows and columns; active matrix elements including non-linear two-terminal devices, liquid crystal and an oriented film each connected in series between the row electrodes and the column electrodes; means for applying driving signals to the row electrodes and the column electrodes; and wherein said driving signals added to the selected row electrodes are pulses having a peak value that sufficiently lowers the resistance of the corresponding nonlinear two-terminal device; and said driving signals added to the non-selected row electrodes are signals having the same phase and the same amplitudes as display data input to column electrodes.

0278778

# FIG. 1(a)

# FIG. 1(b)

1 FRAME

(i)

$V_{DD}$

$\frac{1}{2}(V_{DD}-V_{SS})$

$V_{SS}$

Pnsel

(ii)

$V_{DD}$

$\frac{1}{2}(V_{DD}-V_{SS})$

Psel

$V_{SS}$

Vsh

$2 \cdot V_{DD}$

$V_{DD}$

Psel'

(iii)

$\frac{1}{2}(V_{DD}-V_{SS})$

$V_{SS}$

NON-SELECTED TERM

$2 \cdot V_{SS}$

SELECTED TERM

# FIG. 1(c)

# FIG.1(d)

(i) SHIFT REGISTER CLOCK ScL

(ii) FRAME SIGNAL SFR

(iii) SIGNAL WAVEFORM OF SELECTED SIGNAL LINE Lsel

WAVEFORM OF 5c

(iv) SIGNAL WAVEFORM OF NON-SELECTED SIGNAL LINE Lnsel

WAVEFORM OF 5d

(V) OUTPUT OF SHIFT REGISTER

$Q_1$

$Q_2$

$Q_n$

(vi) DRIVING WAVEFORM OF ROW ELECTRODE 1C

$V_{DD}$
$\frac{1}{2}(V_{DD}-V_{SS})$
$V_{SS}$

0278778

# FIG. 2(a)

TIMING SIGNAL

ANALOG VIDEO SIGNAL

A/D

COLUMN DRIVER

ROW DRIVER

$V_{DD}$

$V_0$
$V_1$
$V_2$
$V_3$
$V_4$
$V_5$

$V_{SS}$

# FIG. 2(b)

TIMING SIGNAL

SHIFT REGISTER — 8a

A/D COMPARISON DATA

4bit LATCH — 8b

4bit LATCH — 8c

4bit COMPERSION SIGNAL

4bit EQUAL TO COMPERATOR — 8d

$V_0, V_2, V_3, V_5$

WAVEFORM COMBINATION CIRCUIT — 8e

COLUMN ELECTRODE 1d

# FIG. 2(c)

TIMING SIGNAL ⟶ ● ⟶ | SHIFT REGISTER | ⟶ 3a

$V_0, V_1, V_4, V_5$ ⟹ | WAVEFORM COMBINATION | ⟶ 3b

⟶ 3

ROW ELECTRODE 1C

# FIG. 2(d)

$P_s$

$V_s$

$V_{ns}$

$t_{ns}$ | $t_s$ | $t_{ns}$ | $t_s$ | $t_{ns}$

## FIG. 3(a)

0278778

TIMING SIGNAL

VIDEO SIGNAL

COLUMN DRIVER 2

MULTIPLEXER 4

ROW DRIVER 3

$V_{DD}$ $V_0$, $V_1$, $V_2$, $V_3$ $V_{SS}$

## FIG. 3(b)

TIMING SIGNAL → SHIFT REGISTER 2a

VIDEO SIGNAL → ANALOGUE SWITCHS 2b

COLUMN ELECTRODE 1d

## FIG. 3(c)

TIMING SIGNAL → SHIFT REGISTER 3a

$V_0$, $V_1$, $V_2$, $V_3$ → WAVEFORM COMBINATION CIRCUIT 3b

ROW ELECTRODE 1c

0278778

# FIG.3(d)

( i ) VOLTAGE WAVEFORM APPLIED TO COLUMN ELECTRODE 1d

( ii ) VOLTAGE WAVEFORM APPLIED TO ROW ELECTRODE 1C

Psel

Pnsel

Pnsel

( iii ) VOLTAGE WAVEFORM APPLIED TO PIXEL 10

Psel

Vsel

Vsel

tns